# FASCICULE DE BREVET EUROPEEN

(11) **EP 3 246 194 B1**
(45) Date de publication et mention de la délivrance du brevet: **17.03.2021**
(21) Numéro de dépôt: 17171770.5
(22) Date de dépôt: 18.05.2017
(51) Int. Cl.: B60L 1/00, B60L 1/02, B60L 7/10, B60L 9/00

(54) **SYSTÈME DE CLIMATISATION POUR UN VÉHICULE DE TRANSPORT ÉLECTRIQUE**
KLIMATISIERUNGSSYSTEM FÜR EIN ELEKTRISCHES TRANSPORTFAHRZEUG
AIR-CONDITIONING SYSTEM FOR AN ELECTRIC TRANSPORT VEHICLE

(30) Priorité: 20.05.2016 FR 1654510
(43) Date de publication de la demande: 22.11.2017
(73) Titulaire: Faiveley Transport Tours, 37700 Saint Pierre des Corps (FR)
(72) Inventeur: HUAULME, Patrice, 37000 Tours (FR); AUBIN, Philippe, 37390 Chanceaux Sur Choisille (FR); PALMISANO, Domenico, 59700 Marcq en Baroeul (FR)
(74) Mandataire: Santarelli

(56) Documents cités:
- DE-A1- 4 416 107
- US-A1- 2015 191 090
- US-A1- 2016 075 350

## Description

La présente invention concerne un système de climatisation pour un véhicule de transport électrique.

L'invention s'applique en particulier à des véhicules de transport électrique urbains, ces véhicules ayant des arrêts fréquents et par conséquent comportant des phases de traction et de freinage courtes.

Les réseaux de transport électrique étant de plus en plus fréquentés, les réseaux électriques alimentant les véhicules peuvent se trouver sous-dimensionnés lors des heures de pointe. Il est ainsi nécessaire de réduire la consommation d'énergie dans les réseaux de transport électrique, en particulier les pics de consommation.

Certains équipements tels que les systèmes de climatisation consomment une énergie électrique importante.

Un système de climatisation comporte un ensemble d'actionneurs et est configuré pour maintenir des conditions climatiques dans un habitacle.

De manière générale, les actionneurs comportent entre autre, un compresseur, un ventilateur et des moyens de chauffage tels que des résistances. On notera que les actionneurs produisant de la chaleur ou du froid sont des actionneurs consommant des énergies électriques importantes.

Les conditions climatiques sont représentées par un ensemble de paramètres, tels que la température, l'humidité ou la pollution de l'air.

Ainsi, le système de climatisation est configuré pour maintenir les paramètres représentatifs des conditions climatiques à des valeurs prédéterminées. Par exemple, ils sont configurés pour maintenir la température de l'habitacle à une température prédéterminée ou température de consigne.

Afin de maintenir les paramètres représentatifs des conditions climatiques à des valeurs prédéterminées, le système de climatisation comporte des moyens de régulation qui sont configurés pour générer des commandes de fonctionnement des actionneurs en fonction d'un ensemble de paramètres représentatifs de conditions climatiques à l'intérieur et à l'extérieur de l'habitacle.

Par exemple, la régulation de la température à une valeur de température prédéterminée est mise en œuvre en fonction de la température intérieure et extérieure à l'habitacle.

On notera qu'à l'intérieur d'un habitacle, le taux de de CO₂ est lié au nombre de personnes présentes dans l'habitacle. Ainsi, dans les systèmes de climatisation classiques, le système de renouvellement d'air doit être dimensionné pour que l'air soit renouvelé lorsque l'habitacle présente un taux d'occupation maximale.

De manière connue dans certains systèmes de climatisation, le taux de CO₂ à l'intérieur de l'habitacle peut être en outre pris en compte afin de réguler le taux de renouvèlement de l'air à l'intérieur de l'habitacle et réduire ainsi la consommation d'énergie du système de climatisation, en particulier lorsque l'occupation de l'habitacle est faible.

Ainsi, en fonction des paramètres tels que la température intérieure ou extérieure à l'habitacle, et éventuellement de taux de CO₂ dans l'air de l'habitacle, des moyens de régulation du système de climatisation génèrent des commandes de fonctionnement appliquées aux différents actionneurs composant le système de climatisation.

Ces commandes de fonctionnement sont telles que les actionneurs délivrent une puissance moyenne sur un intervalle de temps prédéterminé.

Afin de réduire la consommation d'énergie électrique dans un véhicule de transport électrique, des solutions existent consistant à récupérer de l'énergie électrique dans certaines phases du fonctionnement ou modes de déplacement du véhicule, pour ensuite l'utiliser dans d'autres phases de fonctionnement ou modes de déplacement, et ce dans le même véhicule duquel l'énergie est récupérée ou dans un autre véhicule alimenté par le même réseau d'alimentation électrique. De tels systèmes de freinage régénératif et de climatisation pour véhicules ferroviaires sont décrits dans les publications de brevets DE4416107 A1 (ABB Patent), US2016/075350 A1 (Becker Susanne) et US2015/191090 A1 (Sawa Takuya).

Pendant les phases de freinage de véhicules électriques non équipés de dispositifs de récupération d'énergie, des rhéostats connectés aux moteurs du véhicule dissipent l'énergie électrique générée par les moteurs du véhicule sous forme de chaleur.

Ainsi, pendant cette phase de fonctionnement, l'énergie électrique générée est récupérée au lieu d'être dissipée dans des rhéostats.

Par exemple, l'énergie récupérée dans des phases de freinage est utilisée dans des phases de traction du même véhicule duquel l'énergie est récupérée ou dans des phases de traction d'un autre véhicule alimenté par le même réseau d'alimentation électrique.

Selon des techniques de récupération d'énergie, les systèmes de climatisation d'un véhicule peuvent être alimentés par de l'énergie récupérée lors des phases de freinage de ce même véhicule ou d'un autre véhicule alimenté par le même réseau d'alimentation électrique.

La présente invention a pour but d'améliorer les techniques de réduction de la consommation d'énergie de sorte à réduire les pics de consommation d'énergie d'un système de climatisation dans un véhicule de transport électrique.

A cet effet, l'invention vise, selon un premier aspect, un système de climatisation pour un véhicule de transport électrique alimenté par un réseau d'alimentation électrique, le système de climatisation comportant
- au moins un actionneur produisant de la chaleur ou du froid , et
- des moyens de régulation configurés pour générer au moins une commande de fonctionnement appliquée audit au moins un actionneur en fonction de valeurs de paramètres représentatifs des conditions climatiques, ledit au moins un actionneur délivrant une puissance moyenne sur un intervalle de temps prédéterminé.

Selon l'invention, les moyens de régulation sont configurés pour générer ladite au moins une commande de fonctionnement appliquée audit au moins un actionneur en fonction en outre de la valeur d'un paramètre relatif à au moins un véhicule de transport électrique alimenté par le réseau d'alimentation électrique, la valeur du paramètre indiquant que de l'énergie électrique est consommée par ledit au moins un véhicule de transport électrique ou que de l'énergie électrique est produite par ledit au moins un véhicule électrique, ladite au moins une commande de fonctionnement étant générée de sorte que la puissance moyenne délivrée par ledit au moins un actionneur sur l'intervalle de temps prédéterminé présente sensiblement la même valeur que lorsque les moyens de régulation prennent uniquement en compte les paramètres représentatifs des conditions climatiques, sur l'intervalle de temps prédéterminé ladite au moins une commande de fonctionnement étant générée de sorte que
- si pendant une première période A où la valeur dudit au moins un paramètre indique que de l'énergie électrique est consommée par ledit au moins un véhicule de transport électrique, la puissance moyenne délivrée par ledit au moins un actionneur pendant la première période A est inférieure à la valeur de la puissance moyenne pendant l'intervalle de temps prédéterminé lorsque uniquement les paramètres représentatifs des conditions climatiques sont prises en compte pour la génération de ladite au moins une commande de fonctionnement, et
- si pendant une seconde période B la valeur dudit au moins un paramètre indique que de l'énergie électrique est produite par ledit au moins un véhicule de transport électrique, la puissance moyenne délivrée par ledit au moins un actionneur pendant ladite seconde période B est supérieure à ladite valeur de la puissance moyenne pendant ledit intervalle de temps prédéterminé lorsqu'uniquement lesdits paramètres représentatifs des conditions climatiques sont prises en compte pour ladite génération de ladite commande de fonctionnement,
ledit au moins un paramètre relatif à au moins un véhicule de transport électrique étant relatif à au moins un véhicule de transport électrique alimenté par ledit réseau d'alimentation électrique et différent dudit véhicule de transport électrique comportant ledit système de climatisation.

Ainsi, les moyens de régulation tiennent compte des conditions climatiques, ainsi que d'au moins un paramètre relatif à au moins un véhicule de transport électrique pour la génération des commandes de fonctionnement des actionneurs du système de climatisation d'un véhicule.

Ainsi, grâce à ces caractéristiques, les commandes de fonctionnement sont générées en tenant compte, en plus de valeurs de paramètres représentatifs des conditions climatiques, de la valeur du paramètre relative à au moins un véhicule de transport électrique, sans pour autant modifier la valeur de la puissance moyenne délivrée par ledit au moins un actionneur sur l'intervalle de temps prédéterminé, par rapport à la puissance moyenne délivrée par l'actionneur lorsque seulement les valeurs de paramètres représentatifs des conditions climatiques sont pris en compte.

Les moyens de régulation fonctionnent ainsi de façon à maintenir des conditions climatiques prédéfinies, c'est-à-dire à maintenir la valeur des paramètres représentatifs des conditions climatiques à des valeurs prédéfinies, tout en prenant en compte au moins un paramètre relatif à un véhicule de transport électrique.

Ceci permet de réguler les conditions climatiques dans un véhicule tout en réduisant les pics de consommation d'énergie électrique. Ainsi, la consommation d'énergie électrique est optimisée.

On notera que dans les véhicules de transport électrique équipés d'un dispositif de récupération de l'énergie de freinage, lorsque le paramètre indique que de l'énergie électrique est consommée, le véhicule de transport électrique se trouve, par exemple, dans une phase de traction. Ainsi, pendant la première période A, la puissance délivrée par ledit au moins actionneur est diminuée par rapport à la valeur de la puissance moyenne pendant l'intervalle de temps prédéterminé lorsqu'uniquement les paramètres représentatifs des conditions climatiques sont prises en compte.

En outre, dans les véhicules de transport électrique équipés d'un dispositif de récupération de l'énergie de freinage, lorsque le paramètre indique que de l'énergie électrique est produite, le véhicule de transport électrique se trouve, par exemple, dans une phase de freinage. Ainsi, pendant la seconde période B, la puissance délivrée par ledit au moins actionneur est augmentée par rapport à la valeur de la puissance moyenne pendant l'intervalle de temps prédéterminé lorsqu'uniquement les paramètres représentatifs des conditions climatiques sont prises en compte.

Selon une caractéristique, ladite au moins une commande de fonctionnement appliquée audit au moins un actionneur comporte un signal de commande, lors de la génération de la commande de fonctionnement, au moins un paramètre du signal de commande étant modifié en fonction de la valeur du paramètre relatif à au moins un véhicule de transport électrique.

Ainsi, en modifiant au moins un paramètre du signal de commande appliqué audit au moins un actionneur, la puissance instantanée délivrée par l'actionneur est modifiée, tout en gardant la valeur de puissance moyenne sur l'intervalle de temps prédéterminé.

Selon une caractéristique, le paramètre dudit signal de commande est une amplitude ou une durée.

Selon une caractéristique, les moyens de régulation comportent :
- un premier module de régulation configuré pour générer au moins une commande de fonctionnement intermédiaire en fonction d'au moins un paramètre représentatif des conditions climatiques, et
- un second module de régulation configuré pour modifier ladite au moins une commande de fonctionnement intermédiaire en fonction de la valeur du paramètre relatif à au moins un véhicule de transport électrique et pour générer ladite au moins une commande de fonctionnement appliquée audit au moins un actionneur.

Ainsi, à conditions climatiques équivalentes, une commande de fonctionnement d'un actionneur (commande de fonctionnement intermédiaire) générées par le premier module de régulation peut être modifiée de sorte que l'actionneur peut fonctionner différemment en fonction de la valeur du paramètre relatif à au moins un véhicule de transport électrique.

On notera que la consommation d'énergie est représentée par la valeur d'au moins un paramètre relatif à au moins un véhicule de transport électrique, cette valeur étant différente en fonction du mode de déplacement du véhicule de transport électrique. Ainsi, en prenant compte de la valeur dudit au moins un paramètre relatif à au moins un véhicule de transport électrique, la consommation d'énergie du mode de déplacement est prise en compte.

Par ailleurs, le second module de régulation peut être ajouté à un système de climatisation classique, c'est-à-dire comportant seulement le premier module de régulation, permettant ainsi d'obtenir un système de climatisation avec une consommation optimisée à partir d'un système de climatisation classique.

Selon une caractéristique, le système de climatisation comporte en outre des moyens d'accumulation d'énergie configurés pour accumuler de l'énergie électrique lorsque la valeur du paramètre relatif à au moins un véhicule de transport électrique est indicatif de la production d'énergie électrique par ledit au moins un véhicule de transport électrique.

Par exemple, un véhicule de transport électrique produit de l'énergie lorsqu'il se trouve en phase de freinage.

Ainsi par exemple, lorsque le véhicule se trouve en mode de freinage, l'énergie générée est stockée dans des moyens d'accumulation et peut être réutilisée ultérieurement.

Selon une autre caractéristique, le système de climatisation comporte en outre des moyens de délestage configurés pour déconnecter ledit système de climatisation dudit réseau d'alimentation électrique lorsque la valeur du paramètre relatif à au moins un véhicule de transport électrique est indicatif de la consommation d'énergie électrique par ledit au moins un véhicule de transport électrique.

Par exemple, un véhicule de transport électrique consomme de l'énergie lorsqu'il se trouve en phase de traction.

Ainsi par exemple, lorsque le véhicule se trouve en mode de traction, l'énergie consommée par ce mode étant élevée, l'énergie électrique consommée par le système de climatisation est nulle ou diminuée et les pics de consommation d'énergie sont réduits.

Selon une caractéristique, la valeur du paramètre relatif à au moins un véhicule de transport électrique comporte :
- une valeur de puissance électrique, ou d'une force de traction, ou d'une force de freinage, ou d'une distance, ou d'une vitesse, ou d'une accélération, ou
- une valeur représentatif d'un état d'ouverture ou de fermeture des portes dudit au moins un véhicule de transport électrique, ou
- une valeur d'une tension dudit réseau électrique alimentant ledit au moins un véhicule de transport électrique.

Selon une autre caractéristique, ledit au moins un paramètre relatif à au moins un véhicule de transport électrique est relatif à plusieurs véhicules de transport électrique alimentés par le réseau d'alimentation électrique.

L'invention vise, selon un second aspect, un véhicule de transport électrique alimenté par un réseau d'alimentation électrique comportant un système de climatisation conforme à l'invention, lesdits moyens de régulation du système de climatisation étant configurés pour générer ladite au moins une commande de fonctionnement appliquée audit au moins un actionneur de production de chaleur ou de froid en fonction en outre de la valeur d'au moins un paramètre relatif à au moins un véhicule de transport électrique alimenté par le réseau d'alimentation électrique, la valeur du paramètre indiquant que de l'énergie électrique est consommée par ledit au moins un véhicule de transport électrique ou que de l'énergie électrique est produite par ledit au moins un véhicule électrique, ladite au moins une commande de fonctionnement étant générée de sorte que la puissance moyenne délivrée par ledit au moins un actionneur sur l'intervalle de temps prédéterminé présente sensiblement la même valeur que lorsque les moyens de régulation prennent uniquement en compte les paramètres représentatifs des conditions climatiques.

Selon une caractéristique, le véhicule de transport électrique comporte en outre des moyens d'accumulation d'énergie configurés pour accumuler de l'énergie électrique, lorsque la valeur du paramètre relatif audit au moins un véhicule de transport électrique est indicatif de la production d'énergie électrique par ledit au moins un véhicule de transport électrique.

Selon une caractéristique, le véhicule de transport électrique comporte en outre des moyens de délestage configurés pour déconnecter le système de climatisation du réseau d'alimentation électrique lorsque la valeur du paramètre relatif à au moins un véhicule de transport électrique est indicatif de la consommation d'énergie électrique par ledit au moins un véhicule de transport électrique.

Selon une caractéristique, ledit au moins un paramètre relatif à au moins un véhicule de transport électrique est relatif à plusieurs véhicules de transport électrique alimentés par le réseau d'alimentation électrique.

L'invention vise, selon un troisième aspect, un procédé de régulation de paramètres représentatifs des conditions climatiques à des valeurs prédéfinies dans un véhicule de transport électrique alimenté par un réseau d'alimentation électrique, comportant la génération d'au moins une commande de fonctionnement appliquée à au moins un actionneur de production de chaleur ou du froid d'un système de climatisation en fonction de valeurs de paramètres représentatifs des conditions climatiques, ledit au moins un actionneur délivrant une puissance moyenne sur un intervalle de temps prédéterminé.

Selon l'invention, la génération de ladite au moins une commande de fonctionnement appliquée audit au moins un actionneur tient en outre compte de la valeur d'un paramètre relatif à au moins un véhicule de transport électrique alimenté par le réseau d'alimentation électrique, ledit au moins un paramètre étant relatif à au moins un véhicule de transport électrique alimenté par ledit réseau d'alimentation électrique et différent dudit véhicule de transport électrique comportant ledit système de climatisation, la valeur du paramètre indiquant que de l'énergie électrique est consommée par ledit au moins un véhicule de transport électrique ou que de l'énergie électrique est produite par ledit au moins un véhicule électrique, ladite au moins une commande de fonctionnement étant générée de sorte que la puissance moyenne délivrée par ledit au moins un actionneur sur l'intervalle de temps prédéterminé présente sensiblement la même valeur que lorsque lors de la génération uniquement les paramètres représentatifs des conditions climatiques sont pris en compte, sur l'intervalle de temps prédéterminé, ladite au moins une commande de fonctionnement est générée de sorte que :
- si pendant une première période A où la valeur dudit au moins un paramètre indique que de l'énergie électrique est consommée par ledit au moins un véhicule de transport électrique, la puissance moyenne délivrée par ledit au moins un actionneur pendant ladite première période A est inférieure à la valeur de la puissance moyenne pendant l'intervalle de temps prédéterminé lorsque uniquement les paramètres représentatifs des conditions climatiques sont prises en compte pour la génération de la commande de fonctionnement, et
- si pendant une seconde période B la valeur dudit au moins un paramètre indique que de l'énergie électrique est produite par ledit au moins un véhicule de transport électrique, la puissance moyenne délivrée par ledit au moins un actionneur pendant la seconde période B est supérieure à la valeur de la puissance moyenne pendant l'intervalle de temps prédéterminé lorsque uniquement les paramètres représentatifs des conditions climatiques sont prises en compte pour la génération de la commande de fonctionnement.

Selon une caractéristique, ladite au moins une commande de fonctionnement appliquée audit au moins un actionneur comporte un signal de commande, lors de la génération de la commande de fonctionnement appliquée audit au moins un actionneur, au moins un paramètre du signal de commande étant modifié en fonction de la valeur du paramètre représentatif d'un véhicule de transport électrique.

Selon une caractéristique, le paramètre dudit signal de commande est une amplitude ou une durée.

Selon une caractéristique, la génération comporte :
- la génération d'au moins une commande de fonctionnement intermédiaire en fonction d'au moins un paramètre représentatif des conditions climatiques, et
- la modification de ladite au moins une commande de fonctionnement intermédiaires en fonction de la valeur du paramètre relatif à au moins un véhicule de transport électrique pour générer ladite au moins une commande de fonctionnement appliquée audit au moins un actionneur.

Selon une caractéristique, le procédé de régulation comporte en outre la génération d'un signal de commande de l'accumulation de l'énergie électrique lorsque la valeur du paramètre relatif à au moins un véhicule de transport électrique est indicatif de la production d'énergie électrique par ledit au moins un véhicule de transport électrique.

Selon une caractéristique, le procédé de régulation comporte en outre la génération d'un signal de commande de déconnexion du système de climatisation d'un réseau d'alimentation électrique lorsque la valeur du paramètre relatif à au moins un véhicule de transport électrique est indicatif de la consommation d'énergie électrique par ledit au moins un véhicule de transport électrique.

Le véhicule de transport électrique et le procédé de régulation de paramètres représentatifs des conditions climatiques à des valeurs prédéfinies dans un véhicule de transport électrique présentent des caractéristiques et avantages analogues à ceux décrits précédemment en relation avec le système de climatisation.

D'autres particularités et avantages de l'invention apparaîtront encore dans la description ci-après.

Aux dessins annexés, donnés à titre d'exemples non limitatifs :
- la figure 1 représente schématiquement un système de climatisation conforme à un premier mode de réalisation de l'invention ;
- la figure 2 illustre un schéma représentant un système de climatisation selon un second mode de réalisation de l'invention ;
- la figure 3 illustre schématiquement un procédé de régulation conforme à un mode de réalisation de l'invention ;
- les figures 4 et 5 représentent des signaux de commande dans le temps générés par des systèmes de climatisation conforme à des modes de réalisation de l'invention.

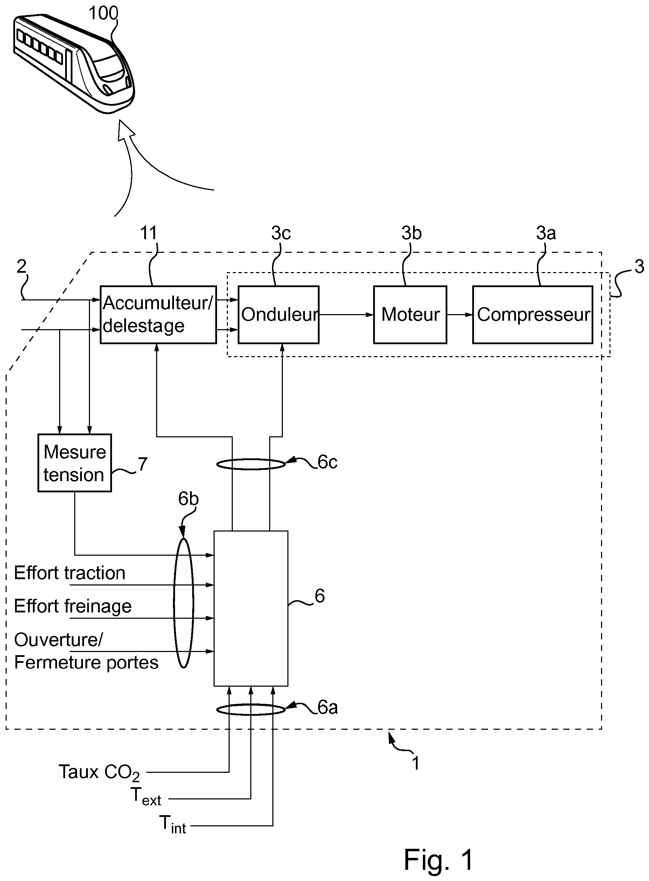

La **figure 1** représente un système de climatisation conforme à un premier mode de réalisation de l'invention.

L'invention s'applique particulièrement aux véhicules de transport électrique urbains, comme par exemple des métros ou des tramways, des trolleys bus, etc.

Le système de climatisation 1 est monté dans un véhicule de transport électrique 100. Le véhicule de transport électrique 100 est alimenté par un réseau d'alimentation électrique 2.

Le système de climatisation 1 comporte au moins un actionneur tels qu'un compresseur, des ventilateurs, des résistances de chauffage, etc.

Sur la figure 1, uniquement un actionneur 3 est représenté afin de simplifier la figure. Dans cet exemple représenté, l'actionneur proprement dit est un compresseur 3a, le fonctionnement du compresseur 3a étant commandé par un moteur 3b, le moteur 3b étant alimenté par un onduleur à fréquence variable 3c.

On notera que l'actionneur 3 produit de la chaleur (par exemple dans des systèmes de climatisation dits « réversibles ») ou du froid.

Le système de climatisation 1 comporte en outre des moyens de régulation 6 configurés pour générer des commandes de fonctionnement des actionneurs 6c, telles qu'une commande contrôlant la vitesse du moteur 3b commandant le compresseur 3a.

Bien entendu, les commandes de fonctionnement des actionneurs 6c comportent d'autres commandes non représentées sur les figures, telles que des commandes contrôlant la vitesse des ventilateurs, le branchement ou débranchement des résistances de chauffage, etc.

Ainsi, les commandes de fonctionnement des actionneurs 6c sont des signaux de sortie des moyens de régulation 6.

Les moyens de régulation 6 reçoivent en entrée un premier ensemble de paramètres représentatifs des conditions climatiques 6a et un second ensemble de paramètres relatifs à au moins un véhicule de transport électrique 6b. La valeur du paramètre indique si de l'énergie électrique est consommée par ledit au moins un véhicule de transport électrique, ou si de l'énergie électrique est produite par ledit au moins un véhicule de transport électrique.

On notera que dans un mode de réalisation non revendiqué ledit au moins un paramètre relatif à au moins un véhicule de transport électrique 6b peut être relatif au véhicule du transport électrique sur lequel est monté le système de climatisation 1. Il peut aussi être relatif à un second véhicule de transport électrique alimenté par le même réseau d'alimentation électrique 2, ou à plusieurs véhicules de transport électriques alimentés par le même réseau d'alimentation électrique 2.

La valeur du paramètre relatif à au moins un véhicule de transport électrique 6b est fonction par exemple, des actions relatives à la conduite du véhicule. Une action relative à la conduite d'un véhicule peut être la traction ou le freinage électrique. Ainsi, un paramètre représentatif d'une action relative à la conduite peut être un effort de traction ou un effort de freinage électrique, sa valeur représentant le niveau de l'effort de traction ou de l'effort de freinage électrique respectivement.

Ainsi, par exemple, la valeur du paramètre relatif à au moins un véhicule de transport électrique peut être:
- une valeur de puissance électrique, ou d'une force de traction, ou d'une force de freinage, ou d'une distance, ou d'une vitesse, ou d'une accélération, ou
- une valeur représentatif d'un état d'ouverture ou de fermeture des portes dudit au moins un véhicule de transport électrique (l'ouverture et la fermeture des portes étant commandées lorsque le véhicule est à l'arrêt), ou
- une valeur d'une tension dudit réseau d'alimentation électrique 2 alimentant ledit au moins un véhicule de transport électrique.

On notera que lorsqu'un véhicule de transport électrique équipé d'un dispositif de récupération de l'énergie de freinage, alimenté par un réseau d'alimentation électrique freine au moyen de ses moteurs de traction (l'action relative à la conduite étant une action de freinage), la tension sur le réseau d'alimentation électrique augmente si le véhicule de transport électrique est conçu de telle sorte que l'énergie électrique produite par ses moteurs est renvoyée sur le réseau d'alimentation électrique 2.

Au contraire, lorsqu'au moins un véhicule de transport électrique alimenté par le réseau d'alimentation électrique 2 exerce un effort de traction (l'action relative à la conduite étant une traction), la valeur de la tension du réseau d'alimentation électrique augmente.

Dans le mode de réalisation représenté, les paramètres relatifs à au moins un véhicule 6b comportent un effort de traction, un effort de freinage, une valeur représentative d'un état d'ouverture ou de fermeture des portes, et la tension mesurée du réseau d'alimentation électrique 2.

L'ensemble des paramètres représentant les conditions climatiques 6a comporte dans le mode de réalisation représenté la température intérieure et extérieure au véhicule, et le taux de CO₂. Ces paramètres sont des paramètres classiques dans un système de climatisation. D'autres paramètres peuvent être utilisés tels que l'humidité.

Les moyens de régulation 6 sont configurés pour générer les commandes de fonctionnement 6c appliquées aux actionneurs en fonction de valeurs des paramètres représentatifs des conditions climatiques 6b ainsi que de la valeur d'un paramètre relatif à au moins un véhicule de transport électrique alimenté par le réseau d'alimentation électrique 2, la valeur du paramètre indiquant que de l'énergie électrique est consommée par ledit au moins un véhicule de transport électrique ou que de l'énergie électrique est produite par ledit au moins un véhicule de transport électrique,

Ainsi, les commandes de fonctionnement 6c appliquées aux actionneurs 3 sont générées de sorte qu'au moins un des paramètres représentant les conditions climatiques est maintenu à une valeur prédéfinie tout en prenant compte de la valeur d'au moins un paramètre relatif à au moins un véhicule de transport électrique 6b alimenté par le réseau d'alimentation électrique 2.

Comme il sera décrit ultérieurement, ladite au moins une commande de fonctionnement appliquée à audit au moins un actionneur 3 est générée de sorte que la puissance moyenne délivrée par ledit au moins un actionneur 3 sur un intervalle de temps prédéterminé présente sensiblement la même valeur que lorsque les moyens de régulation 6 prennent uniquement en compte lesdits paramètres représentatifs des conditions climatiques 6a.

Dans le mode de réalisation décrit sur la figure 1, le système de climatisation comporte en outre des moyens de mesure de la tension 7 du réseau d'alimentation électrique 2, afin de générer en entrée des moyens de régulation 6, une valeur d'un paramètre relatif à au moins un véhicule de transport électrique alimenté par le réseau d'alimentation électrique 2.

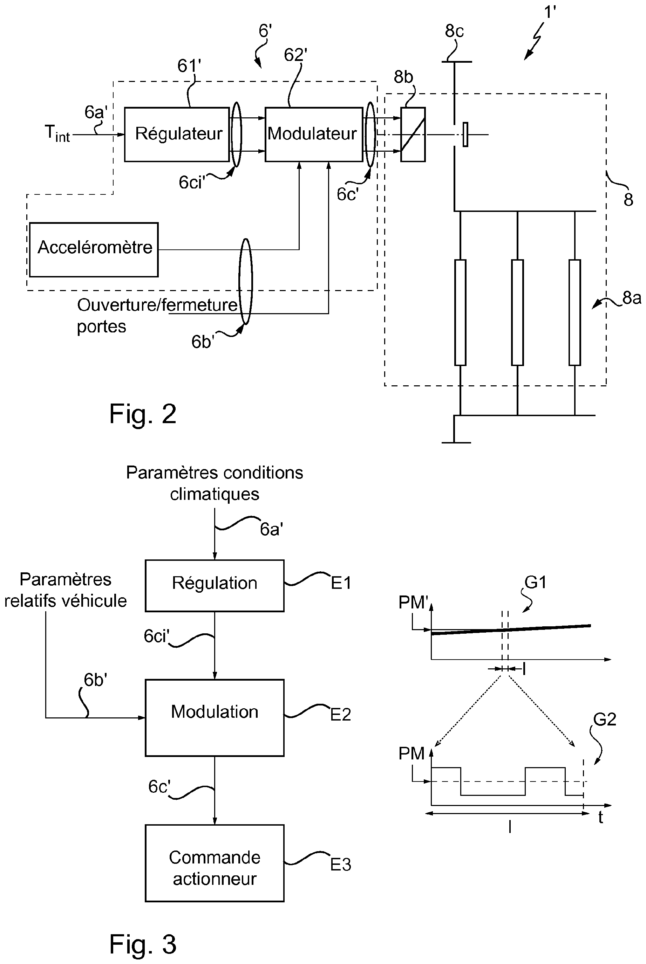

La **figure 2** représente un deuxième mode de réalisation d'un système de climatisation pour un véhicule de transport électrique.

Comme il sera expliqué, ce mode de réalisation convient à l'adaptation d'un système de climatisation classique afin d'obtenir un système de climatisation 1' selon l'invention.

Comme pour le mode de réalisation représenté par la figure 1, un unique actionneur 8 est représenté afin de simplifier la figure.

Dans le mode de réalisation représenté, l'actionneur proprement dit est un ensemble de résistances de chauffage 8a, ces résistances de chauffage étant des actionneurs produisant de la chaleur.

L'ensemble de résistances de chauffage 8a est relié à un contacteur 8b. Le contacteur 8b permet de relier ou de ne pas relier l'ensemble de résistances de chauffage 8a à une alimentation 8c.

Le contacteur 8b est commandé par des commandes de fonctionnement 6c.

Bien entendu, le système de climatisation 1' comporte d'autres actionneurs, non représentés sur la figure.

Dans un mode de réalisation, les moyens de régulation 6' comportent dans un mode de réalisation un premier module de régulation 61' et un second module de régulation 62'.

Le premier module de régulation 61' est configuré pour générer des commandes de fonctionnement intermédiaires 6ci' des actionneurs en fonction d'au moins un paramètre représentatif des conditions climatiques 6a'.

Dans le mode de réalisation représenté, un paramètre représentatif des conditions climatiques 6a' est la température intérieure au véhicule.

Ainsi, le premier module de régulation 61' génère en sortie des commandes de fonctionnement intermédiaires 6ci' des actionneurs en fonction de la température intérieure du véhicule dans lequel le système de climatisation 1' est monté.

Le second module de régulation 62' est configuré pour modifier les commandes de fonctionnement intermédiaires 6ci' appliquées aux actionneurs 8 en fonction de la valeur d'au moins un paramètre relatif à au moins un véhicule de transport électrique 6b' et pour générer ladite au moins une commande de fonctionnement 6c' appliquée audit au moins un actionneur 8.

Autrement dit, les commandes de fonctionnement intermédiaires 6ci' des actionneurs 8 sont modulées en fonction de la valeur d'au moins un paramètre relatif à au moins un véhicule de transport électrique 6b', afin de générer en sortie des commandes de fonctionnement 6c' appliquées aux actionneurs 8 ou commandes de fonctionnement 6c' appliquées aux actionneurs modulés.

Le second module de régulation 62' comporte en entrée les commandes de fonctionnement intermédiaires 6ci' appliquées aux actionneurs 8, et de la valeur d'au moins un paramètre relatif à au moins un véhicule de transport électrique 6b'.

Dans le mode de réalisation représenté, les paramètres relatifs à au moins un véhicule de transport électrique 6b' sont une accélération du véhicule et une valeur représentative de l'état d'ouverture ou de fermeture des portes. L'accélération du véhicule provient d'un accéléromètre. On notera que l'information de l'accélération provenant d'un accéléromètre ne permet pas de savoir si le véhicule de transport électrique freine ou accélère lorsque ce véhicule peut se déplacer de façon réversible, c'est-à-dire qu'il comporte une cabine de conduite à chacune de ses extrémités.

Ainsi, l'information complémentaire de l'ouverture ou la fermeture des portes permet au second module de régulation 62' de savoir si le véhicule accélère ou freine, le véhicule ne pouvant accélérer qu'après la fermeture des portes.

Dans ce mode de réalisation, le premier module de régulation 61' est configuré pour générer des commandes de fonctionnement intermédiaires 6ci' appliquées aux actionneurs 8 en fonction de la température intérieure au véhicule dans lequel le système de climatisation 1' est installé, et le second module de régulation 62' est configuré pour modifier la commande de fonctionnement intermédiaires 6ci' appliquées aux actionneurs 8 en fonction des valeurs des paramètres relatif à un véhicule de transport électrique 6b', les valeurs étant une accélération du véhicule dans lequel le système de climatisation 1' est installé et une valeur représentative d'un état d'ouverture ou de fermeture des portes du véhicule de transport électrique.

Dans le mode de réalisation représenté, les commandes de fonctionnement appliquées aux actionneurs 6c' commandent la connexion ou la déconnexion des résistances de chauffage 8a à une alimentation 8c au moyen d'un contacteur 8b.

Le système de climatisation conforme à l'invention 1, 1' met en œuvre un procédé de régulation des paramètres représentatifs des conditions climatiques à des valeurs prédéfinies dans un véhicule de transport électrique.

Un procédé de régulation des paramètres représentatifs des conditions climatiques à des valeurs prédéfinies conforme à un mode de réalisation est représenté sur la **figure 3**. Le procédé comporte la génération E1 d'au moins une commande de fonctionnement appliquée à au moins un actionneur 3, 8 d'un système de climatisation en fonction de valeurs de paramètres représentatifs des conditions climatiques 6a, 6a', ledit au moins un actionneur 3, 8 délivrant une puissance moyenne sur un intervalle de temps prédéterminé I.

La génération E2, E3 de ladite au moins une commande de fonctionnement appliquée audit au moins un actionneur tient en outre compte de la valeur d'un paramètre relatif à au moins un véhicule de transport électrique 6b, 6b' alimenté par ledit réseau d'alimentation électrique 2. La valeur du paramètre indique que de l'énergie électrique est consommée par ledit au moins un véhicule de transport électrique ou que de l'énergie électrique est produite par ledit au moins un véhicule électrique.

Ladite au moins une commande de fonctionnement 6c, 6c' est générée de sorte que la puissance moyenne délivrée PM par ledit au moins un actionneur 3, 8 sur ledit intervalle de temps prédéterminé présente sensiblement la même valeur PM' que lorsque les moyens de régulation 6, 6' prennent uniquement en compte les paramètres représentatifs des conditions climatiques.

Dans le mode représenté par la figure 3, le procédé correspond à un système de climatisation représenté par la figure 2, c'est-à-dire avec les moyens de régulation comportant des premiers moyens de régulation 61' et des seconds moyens de régulation 62'.

On notera ainsi, que les étapes E1 et E2 sont regroupées en une seule pour le mode de réalisation représenté sur la figure 1.

Le procédé représenté comporte une étape de génération E1 de commandes de fonctionnement intermédiaires 6ci' des actionneurs en fonction d'au moins un paramètre représentatif des conditions climatiques 6a'.

Cette étape de génération E1 correspond à une régulation climatique classique.

Le procédé comporte en outre une étape de modification E2 des commandes de fonctionnement intermédiaires 6ci' des actionneurs générées à l'étape de génération E1, cette modification étant mise en œuvre en fonction de la valeur d'au moins un paramètre relatif à au moins un véhicule de transport électrique 6b' de sorte que, sur un intervalle de temps prédéterminé, la puissance moyenne délivrée PM par au moins un actionneur 8 présente sensiblement la même valeur PM' que lorsque les commandes de fonctionnement intermédiaires 6ci' sont adressées directement aux actionneurs afin de commander leur fonctionnement prenant uniquement en compte les paramètres représentatifs des conditions climatiques 6a'. Des commandes de fonctionnement appliquées aux actionneurs 6c' sont ainsi générées à l'issu de l'étape de modification E2.

Les commandes de fonctionnement des actionneurs 6c' sont adressées aux actionneurs 8 afin de commander leur fonctionnement lors d'une étape de commande des actionneurs E3.

Chaque commande de fonctionnement d'un actionneur 6c' comporte un signal de commande représentant une valeur. Le signal de commande peut être par exemple un signal électrique, tel qu'un signal analogique, numérique ou logique.

Lors de la modification E2 de ladite commande de fonctionnement, au moins un paramètre dudit signal de commande est modifié en fonction de ladite valeur dudit paramètre représentatif d'un véhicule de transport électrique.

Par exemple, le paramètre du signal de commande est une amplitude ou une durée.

La figure 3 illustre des graphiques représentant un signal de commande. Un premier graphique G1 représente un signal de commande ou commande de fonctionnement intermédiaire 6ci' indiquant la puissance à délivrer par un actionneur 8. Lors de l'étape de génération E1 un signal de commande à appliquer à un actionneur 8 est généré, l'actionneur 8 délivrant une puissance moyenne PM' sur un intervalle de temps prédéterminé I.

Un second graphique G2 représente le signal de commande ou commande de fonctionnement 6c' appliqué à un actionneur 8 indiquant la puissance à délivrer par un actionneur 8.

Lors de, l'étape de modification E2, le signal de commande généré lors de l'étape de génération E1, est modifié et généré de sorte que la puissance moyenne PM sur l'intervalle de temps prédéterminé I est sensiblement identique à la valeur une puissance moyenne PM' du signal de commande généré lors de l'étape de génération E1.

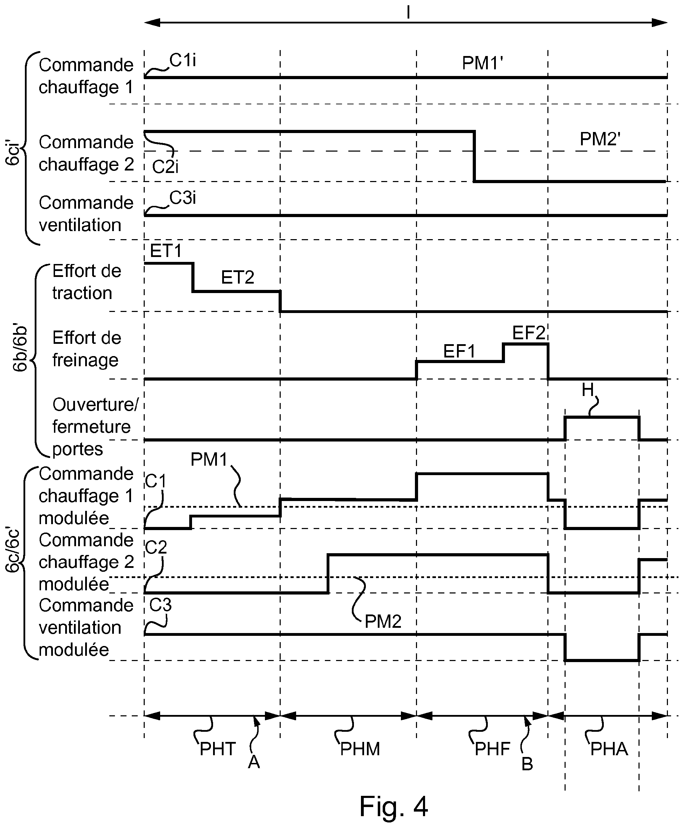

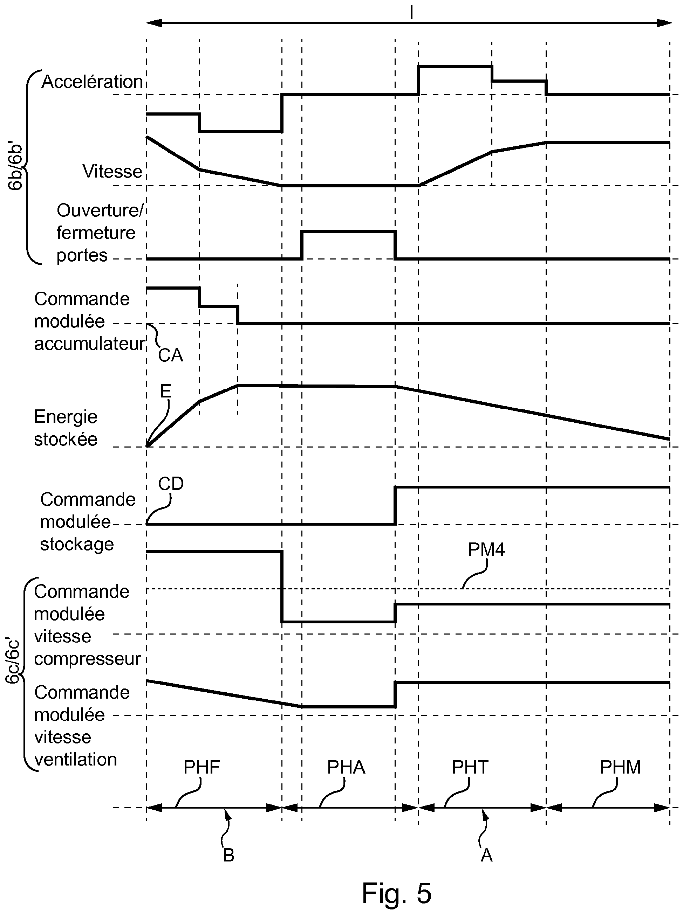

Les figures 4 et 5 représentent l'évolution dans le temps des commandes de fonctionnement 6c, 6c' des actionneurs 3, 8 générées dans des systèmes de climatisation 1,1' selon deux modes de réalisation différents.

La **figure 4** représente un premier groupe de signaux représentant des commandes de fonctionnement intermédiaires 6ci' des actionneurs générés en fonction d'au moins un paramètre représentatif des conditions climatiques 6a, 6a'. Ici, le paramètre représentatif des conditions climatiques est la température à l'intérieur d'un habitacle du véhicule de transport électrique, et les actionneurs produisant de la chaleur comportent des résistances de chauffage 8.

La figure 4 représente deux types de commande de fonctionnement des résistances de chauffage. Une première commande de fonctionnement des résistances de chauffage est représentée par un signal de commande C1 représentant une valeur de puissance de chauffage.

Une deuxième commande de fonctionnement des résistances de chauffage est représentée par un deuxième signal de commande C2, ce signal de commande étant un signal logique, c'est-à-dire qu'en fonction du niveau ou état de ce signal de commande C2, les résistances de chauffage sont connectées à la tension d'alimentation 2, soit elles sont déconnectées de la tension d'alimentation. Dans le mode de réalisation représenté, le signal de commande C2 est capable de représenter uniquement 2 valeurs de puissance de chauffage (pleine puissance, puissance nulle).

Un troisième signal de commande C3 représente la commande de fonctionnement des ventilateurs. Dans cet exemple, le signal est un signal logique.

Les signaux de commande ont été représentés en fonction du temps t. La conduite du véhicule (non représenté) évolue en fonction du temps t, plusieurs phases de conduite sont représentées. Pendant une phase de conduite, des actions relatives à la conduite du véhicule sont mises en œuvre.

On notera qu'en fonction de l'action relative à la conduite du véhicule, le véhicule de transport électrique consomme ou produit de l'énergie électrique.

Ainsi, il est représenté une phase de traction PHT, une phase de marche sur l'erre PHM, une phase de freinage PHF et une phase d'arrêt PHA.

Dans l'exemple représenté, ces phases forment un intervalle de temps prédéterminé I. Bien entendu, dans l'intervalle de temps prédéterminé I, le nombre de chacune de ces phases et l'ordre peuvent être différents.

Sur la Figure 4, quatre actions relatives à la conduite du véhicule sont représentées, une première action étant une traction (phase de traction PHT), une seconde action étant une marche sur l'erre (phase de marche sur l'erre PHM), une troisième action étant le freinage (phase de freinage PHF), et une quatrième action étant l'arrêt (phase d'arrêt PHA).

Les valeurs de paramètres relatives à au moins un véhicule de transport électrique sont fonction de la phase sur laquelle se trouve le véhicule de transport électrique.

Dans le mode de réalisation représenté, il est représenté une valeur d'une force de traction, d'une force de freinage électrique, et une valeur représentative d'un état d'ouverture ou de fermeture des portes.

Bien entendu, d'autres paramètres relatifs à au moins un véhicule de transport électrique peuvent être pris en compte. Ces paramètres peuvent comporter :
- une valeur de puissance électrique, ou d'une force de traction, ou d'une force de freinage, ou d'une distance, ou d'une vitesse, ou d'une accélération, ou
- une valeur représentative d'un état d'ouverture ou de fermeture des portes d'un véhicule de transport électrique, ou
- une valeur d'une tension du réseau électrique alimentant au moins un véhicule de transport électrique.

Ainsi, comme représentée sur la figure 4, la valeur de la force ou de l'effort de traction présente une première valeur ET1 (par exemple 100% de la valeur maximale) et une seconde valeur ET2 (par exemple 50%) pendant la phase de traction PHT, la valeur de ces paramètres étant nulle pendant les autres phases représentées.

De façon similaire, la valeur de la force ou de l'effort de freinage présente une première valeur EF1 (par exemple 50%) et une seconde valeur EF2 (par exemple 100%) pendant la phase de freinage, la valeur de l'effort de freinage électrique étant nulle pendant les autres phases de conduite représentées.

La valeur représentative de l'ouverture ou de la fermeture des portes, étant un signal logique binaire présente un niveau bas lorsque l'ouverture des portes n'est pas commandée ou que les portes sont fermées (étant le cas pendant les phases de traction PHT de marche sur l'erre PHM et de freinage PHF) et un niveau haut H représentant l'ouverture des portes (l'ouverture des portes étant commandée lorsque le véhicule se trouve à l'arrêt).

Par exemple, la valeur du paramètre relatif à au moins un véhicule de transport électrique 6b' indique que de l'énergie électrique est consommée pendant la phase de traction PHT ou première période A et indique que de l'énergie est produite pendant la phase de freinage PHF ou seconde phase B.

Pendant la phase d'arrêt PHA ou de marche sur l'erre PHM, de l'énergie n'est ni consommée ni produite.

La figure 4 représente un troisième groupe comportant des commandes de fonctionnement des actionneurs 6c'. Ces commandes 6c' sont générées à l'étape de modification E2 du procédé de régulation. Une première commande de fonctionnement C1 est générée en modifiant la commande de fonctionnement de résistance de chauffage C1 i (commande de fonctionnement intermédiaire). Une seconde commande de fonctionnement du module de chauffage C2 est générée en modifiant la commande de fonctionnement du module de chauffage C2i (commande de fonctionnement intermédiaire). Une troisième commande de fonctionnement du module de ventilation C3 est générée en modifiant la commande de fonctionnement du module de ventilation C3i (commande de fonctionnement intermédiaire).

Les commandes de fonctionnement sont représentés par des signaux de commande C1, C2, C3.

La valeur de chaque signal de commande C1, C2 représente une consigne de puissance ou valeur de puissance délivrée par l'actionneur 3, 8. Elle est telle que la valeur de la consigne de puissance moyenne PM1, PM2 représentée par ce signal sur un intervalle de temps prédéterminé I est sensiblement égale à la valeur de la consigne de puissance moyenne ou puissance moyenne délivrée par l'actionneur PM1', PM2' du signal de commande intermédiaire C1i, C2i générée par le premier module de régulation (représenté sur la figure 2).

Dans un système de climatisation tel que celui représenté sur la figure 1, les moyens de régulation 6 adressent une valeur de vitesse 6c (le signal de commande étant une vitesse) à l'onduleur 3c.

L'onduleur 3c délivre, en fonction de la valeur de vitesse 6c reçue, des signaux de puissance de commande du moteur 3b afin qu'il puisse tourner à la vitesse requise. Le moteur 3b tournant à la vitesse demandée entraîne le compresseur 3a, le compresseur 3a délivrant ainsi une valeur de puissance donnée.

Par conséquent, la valeur du signal de commande 6c est représentative de la consigne de puissance ou valeur de puissance délivrée par l'actionneur 3.

Par exemple, les valeurs de PM1 et PM1' sont de 40% de la valeur maximale et celles de PM2 et PM2' sont de 60%.

Bien entendu, ces valeurs peuvent présenter des valeurs différentes.

Dans ce mode de réalisation, l'intervalle de temps prédéterminé I correspond à la somme des intervalles de temps associé à chacune des phases de conduite correspondant un parcours entre deux stations.

A titre d'exemple nullement limitatif, les phases de traction PHT, de marche sur l'erre PHM, de freinage PHF et d'arrêt PHA ont une même durée de 30s.

Bien entendu, cette valeur de durée peut être différente et les durées des phases peuvent être différentes entre elles.

Ainsi, pendant la phase de traction PHT, le signal de commande du module de chauffage C1 est généré à partir du premier signal de commande intermédiaire C1i, du module de chauffage, ce signal de commande intermédiaire C1i étant modulé par la valeur de l'effort de traction dans cet exemple.

On notera que la valeur de l'effort de traction est une valeur d'un paramètre relatif à un véhicule de transport électrique.

Ainsi, lorsque l'effort de traction présente sa valeur maximale ET1, le signal de commande de résistance de chauffage C1 ou signal de commande modulé de résistance de chauffage C1 présente une valeur nulle, et lorsque la valeur de l'effort de traction présente la seconde valeur ET2, le signal de commande modulé C1 présente une valeur supérieure à 0 et inférieure à la valeur de la consigne de puissance moyenne PM1' sur l'intervalle de temps prédéterminé I.

Pendant la phase de marche sur l'erre PHM dans laquelle la valeur de l'effort de traction est nulle, la valeur représentée par le signal de commande modulée C1 présente une valeur supérieure à la valeur de la consigne de puissance moyenne PM1' sur l'intervalle de temps prédéterminé I. Pendant la phase de freinage, pendant laquelle l'effort de traction est nul, la valeur du signal de commande modulée C1 présente sa valeur supérieure, cette valeur diminuant lorsque le véhicule se trouve à l'arrêt, et étant nulle lorsque la commande d'ouverture des portes est activée.

La valeur moyenne PM1 du signal de commande C1 représentant la commande de fonctionnement du chauffage est sensiblement égale à la valeur de la consigne de puissance moyenne PM1' du signal de commande intermédiaire C1i de chauffage générée par le premier module de régulation 61' sur l'intervalle de temps prédéterminé I.

Le second signal de commande modulé du chauffage C2 est modifié par rapport au second signal de commande intermédiaire C2i de chauffage de sorte qu'il présente un niveau bas pendant la phase de traction PHT et une partie de la phase d'arrêt PHA et de la marche sur l'erre PHM et un niveau haut pendant la phase de freinage PHF ainsi que pendant une partie de phase de marche sur l'erre PHM et pendant la phase d'arrêt PHA après la fermeture des portes.

La valeur de la consigne de puissance moyenne PM2 du signal de commande C2 représentant la commande de fonctionnement du chauffage est sensiblement égale à la valeur moyenne PM2' du signal de commande intermédiaire C2i de chauffage générée par le premier module de régulation sur l'intervalle de temps prédéterminé I.

Par conséquent, lorsque les paramètres relatifs à au moins un véhicule de transport électrique 6b' présentent une valeur indicative de la consommation d'une énergie électrique (due par exemple à la traction du véhicule), le second module de régulation 62' est configuré pour inhiber au moins une des commandes de fonctionnement 6ci' des actionneurs générée par le premier module de régulation 61 ou pour diminuer la valeur du signal représentant la commande de fonctionnement.

Au contraire, lorsque les paramètres relatifs à au moins un véhicule de transport électrique présente une valeur indicative de la production d'une énergie électrique (due par exemple à un freinage du véhicule), le second module de régulation 62' est configuré pour ne pas modifier les commandes de fonctionnement 6ci' générées par le premier module de régulation 61' ou pour augmenter la valeur du signal de commande représentant la commande de fonctionnement.

Afin de réduire les déperditions de chaleur lorsque les portes du véhicule de transport électrique sont ouvertes, le signal de commande modulé de ventilation C3 présente un niveau haut pendant la totalité de l'intervalle de temps prédéterminé I sauf lorsque les portes sont commandées en ouverture.

La **figure 5** représente des signaux de commande selon un autre mode de réalisation. Un premier groupe de signaux représentant la valeur des paramètres relatifs à au moins un véhicule de transport électrique 6b est représenté. Dans cet exemple, les paramètres sont l'accélération du véhicule, la vitesse du véhicule, ainsi qu'une valeur représentative d'un état d'ouverture ou de fermeture des portes.

Un second groupe de signaux de commande 6c, 6c' comporte une commande de fonctionnement du compresseur ou signal de commande modulé du compresseur, et la commande de fonctionnement du ventilateur ou signal de commande modulé du ventilateur.

Un troisième groupe de signaux comporte un signal de commande CA, des moyens d'accumulation d'énergie, un signal E représentant l'énergie stockée dans les moyens d'accumulation d'énergie, et un troisième signal CD représentant un signal de commande de moyens de délestage.

Les valeurs des signaux de commande représentés évoluent dans le temps t.

Dans ce mode de réalisation, une première phase de freinage PHF est représentée, suivie d'une phase d'arrêt PHA, d'une phase de traction PHT et d'une phase de marche sur l'erre PHM.

Comme pour la figure 4, l'ordre et la durée des phases peuvent être différentes de celles représentées.

Les valeurs des paramètres relatifs à au moins un véhicule de transport électrique 6b varient en fonction de la phase de conduite du véhicule. Ces valeurs sont prises en compte lorsque les signaux de commandes modulées sont générés.

Par exemple, la valeur du paramètre relatif à au moins un véhicule de transport électrique 6b indique que de l'énergie électrique est consommée pendant la phase de traction PHT ou première période A et indique que de l'énergie est produite pendant la phase de freinage PHF ou seconde période B.

Bien entendu, l'intervalle de temps prédéterminé I peut comporter plusieurs premières périodes A ou plusieurs secondes périodes B.

Pendant la phase d'arrêt PHA ou de marche sur l'erre PHM, de l'énergie n'est ni consommée ni produite.

Ainsi, comme représenté sur la figure 5, le signal de commande modulé du compresseur (représentant la commande de fonctionnement du compresseur) présente une première valeur lors de la phase de freinage, une deuxième valeur (inférieure à la première valeur) lors de la phase d'arrêt et une troisième valeur (supérieure à la première valeur et inférieure à la deuxième valeur) pendant la phase de traction PHT et la phase de marche sur l'erre PHM. Ces valeurs sont déterminées de sorte que la valeur de la consigne de puissance moyenne ou valeur de la puissance moyenne PM4 délivrée par le compresseur pendant l'intervalle de temps prédéterminé I soit sensiblement égale à la valeur moyenne d'un signal de commande (non représenté) généré en tenant uniquement compte des paramètres représentatifs des conditions climatiques.

Dans l'exemple représenté par la figure 5, afin de réduire les déperditions de chaleur lorsque les portes sont ouvertes, le signal de commande modulé du ventilateur présente des valeurs diminuant pendant la phase de freinage PHF jusqu'à une valeur de ventilation minimum lorsque les portes sont ouvertes pendant la phase d'arrêt PHA, et une retour à la valeur de ventilation normale pendant les phases de traction PHT et de marche sur l'erre PHM.

Dans un mode de réalisation (figure 1), le système de climatisation comporte en outre des moyens d'accumulation d'énergie 11 configurés pour accumuler de l'énergie électrique du réseau d'alimentation électrique 2 en fonction de la valeur du paramètre relatif à au moins un véhicule de transport électrique ou des véhicules de transport électrique alimentés par le même réseau d'alimentation électrique 2.

Dans d'autres modes de réalisation, les moyens d'accumulation d'énergie et/ou les moyens de délestage sont situés dans le véhicule de transport électrique en dehors du système de climatisation 1, 1'.

Le système de climatisation peut comporter en outre des moyens de délestage 11 configurés pour déconnecter le système de climatisation 1, 1' du réseau d'alimentation électrique 2.

Dans ce mode de réalisation, le procédé de régulation comporte la génération d'un signal de commande d'accumulation CA de l'énergie électrique du réseau d'alimentation électrique 2 en fonction de la valeur du paramètre relatif à au moins un véhicule de transport électrique.

Le procédé peut comporter en outre la génération d'une commande de déconnection du système de climatisation 1, 1' du réseau d'alimentation électrique 2.

Le signal de commande de l'accumulation d'énergie électrique CA représenté sur la figure 5 présente des valeurs qui tiennent compte de la valeur des paramètres représentatifs d'une action relative à la conduite du véhicule. Ainsi, pendant la phase de freinage PHF, le signal de commande d'accumulation d'énergie CA présente des valeurs positives indicatives de l'activation de l'accumulation d'énergie d'autant plus élevée que la décélération est élevée. Une fois la charge complète atteinte ou le passage à la phase d'arrêt PHA, le signal de commande de l'accumulation d'énergie électrique CA présente une valeur nulle désactivant l'accumulation d'énergie.

La courbe d'énergie E représente une augmentation de l'énergie stockée dans les moyens d'accumulation pendant la phase de freinage PHF, l'énergie restant stable pendant la phase d'arrêt PHA, et diminuant pendant les phases de traction PHT et de marche sur l'erre PHM.

Le signal de commande de déconnection CD du système de climatisation 1, 1' du réseau d'alimentation électrique présente un niveau nul lorsque le véhicule est dans une phase de freinage PHF et dans une phase d'arrêt PHA jusqu'à la fermeture des portes. Ainsi le système de climatisation est alimenté par le réseau d'alimentation électrique 2. Le signal de commande de déconnection CD présente un niveau haut dès la fermeture des portes dans la phase d'arrêt PHA et lorsque le véhicule est dans une phase de traction PHT ou dans une phase de marche sur l'erre PHM. Dès lors le système de climatisation n'est plus alimenté par le réseau d'alimentation électrique 2 mais par les moyens d'accumulation.

## Revendications

1. Système de climatisation pour un véhicule de transport électrique alimenté par un réseau d'alimentation électrique (2), le système de climatisation comportant
- au moins un actionneur de production de chaleur ou de froid (3, 8), et
- des moyens de régulation (6, 6') configurés pour générer au moins une commande de fonctionnement (6c, 6c') appliquée audit au moins un actionneur (3, 8) en fonction de valeurs de paramètres représentatifs des conditions climatiques (6a, 6a'), ledit au moins un actionneur délivrant une puissance moyenne sur un intervalle de temps prédéterminé (I),
ledit système de climatisation (1, 1') étant configuré de telle sorte que les moyens de régulation sont configurés pour générer ladite au moins une commande de fonctionnement (6c, 6c') appliquée audit au moins un actionneur (3, 8) en fonction en outre de la valeur d'un paramètre (6b, 6b') relatif à au moins un véhicule de transport électrique alimenté par ledit réseau d'alimentation électrique (2), ladite valeur dudit paramètre (6b, 6b') indiquant que de l'énergie électrique est consommée par ledit au moins un véhicule de transport électrique ou que de l'énergie électrique est produite par ledit au moins un véhicule électrique, ladite au moins une commande de fonctionnement (6c, 6c') étant générée de sorte que la puissance moyenne délivrée par ledit au moins un actionneur (3, 8) sur ledit intervalle de temps prédéterminé (I) présente sensiblement la même valeur que lorsque les moyens de régulation (6, 6') prennent uniquement en compte lesdits paramètres représentatifs des conditions climatiques (6a, 6a') sur l'intervalle de temps prédéterminé (I), ladite au moins une commande de fonctionnement (6c, 6c') étant générée de sorte que
- si pendant une première période A où la valeur dudit au moins un paramètre (6b, 6b') indique que de l'énergie électrique est consommée par ledit au moins un véhicule de transport électrique, la puissance moyenne délivrée par ledit au moins un actionneur (3, 8) pendant ladite première période A est inférieure à la valeur de la puissance moyenne pendant ledit intervalle de temps prédéterminé (I) lorsque uniquement lesdits paramètres représentatifs des conditions climatiques (6a, 6a') sont pris en compte pour ladite génération de ladite commande de fonctionnement (6c, 6c'), et
- si pendant une seconde période B la valeur dudit au moins un paramètre indique que de l'énergie électrique est produite par ledit au moins un véhicule de transport électrique, la puissance moyenne délivrée par ledit au moins un actionneur (3, 8) pendant ladite seconde période B est supérieure à ladite valeur de la puissance moyenne pendant ledit intervalle de temps prédéterminé (I) lorsque uniquement lesdits paramètres représentatifs des conditions climatiques (6a, 6a') sont pris en compte pour ladite génération de ladite commande de fonctionnement (6c, 6c'),
ledit système de climatisation (1,1') étant **caractérisé en ce que** ledit au moins un paramètre (6b, 6b') relatif à au moins un véhicule de transport électrique est relatif à au moins un véhicule de transport électrique alimenté par ledit réseau d'alimentation électrique (2) et différent dudit véhicule de transport électrique comportant ledit système de climatisation (1, 1').

2. Système de climatisation conforme à la revendication 1, **caractérisé en ce que** ladite au moins une commande de fonctionnement (6c, 6c') appliquée audit au moins un actionneur (3, 8) comporte un signal de commande (C1, C2), et **en ce que** lors de la génération de ladite commande de fonctionnement (6c, 6c'), au moins un paramètre dudit signal de commande (C1, C2) est modifié en fonction de ladite valeur dudit paramètre (6b, 6b') relatif à au moins un véhicule de transport électrique.

3. Système de climatisation conforme à la revendication 2, **caractérisé en ce que** ledit paramètre dudit signal de commande (C1, C2) est une amplitude ou une durée.

4. Système de climatisation conforme à l'une des revendications 1 à 3, **caractérisé en ce que** les moyens de régulation (6, 6') comportent :
- un premier module de régulation configuré pour générer au moins une commande de fonctionnement intermédiaire (6ci') en fonction d'au moins un paramètre représentatif des conditions climatiques (6a'), et
- un second module de régulation (62') configuré pour modifier ladite au moins une commande de fonctionnement intermédiaire (6ci') en fonction de ladite valeur dudit paramètre (6b') relatif à au moins un véhicule de transport électrique et pour générer ladite au moins une commande de fonctionnement (6c') appliquée audit au moins un actionneur (8).

5. Système de climatisation conforme à l'une des revendications 1 à 4, **caractérisé en ce qu'**il comporte en outre des moyens d'accumulation d'énergie (11) configurés pour accumuler de l'énergie électrique lorsque la valeur du paramètre (6b) relatif à au moins un véhicule de transport électrique est indicatif de la production d'énergie électrique par ledit au moins un véhicule de transport électrique.

6. Système de climatisation conforme à l'une des revendications 1 à 5, **caractérisé en ce qu'**il comporte en outre des moyens de délestage (11) configurés pour déconnecter ledit système de climatisation (1) dudit réseau d'alimentation électrique (2) lorsque la valeur du paramètre (6b) relatif à au moins un véhicule de transport électrique est indicatif de la consommation d'énergie électrique par ledit au moins un véhicule de transport électrique.

7. Système de climatisation conforme à l'une des revendications 1 à 6, **caractérisé en ce que** ladite valeur dudit paramètre (6b, 6b') relatif à au moins un véhicule de transport électrique comporte :
- une valeur de puissance électrique, ou d'une force de traction, ou d'une force de freinage, ou d'une distance, ou d'une vitesse, ou d'une accélération, ou
- une valeur représentatif d'un état d'ouverture ou de fermeture des portes dudit au moins un véhicule de transport électrique, ou
- une valeur d'une tension dudit réseau électrique alimentant ledit au moins un véhicule de transport électrique.

8. Système de climatisation conforme à l'une des revendications 1 à 7, **caractérisé en ce que** ledit au moins un paramètre (6b, 6b') relatif à au moins un véhicule de transport électrique est relatif à plusieurs véhicules de transport électrique alimentés par ledit réseau d'alimentation électrique (2).

9. Véhicule de transport électrique alimenté par un réseau d'alimentation électrique (2), **caractérisé en ce qu'**il comporte un système de climatisation (1, 1') conforme à l'une des revendications 1 à 8, lesdits moyens de régulation (6, 6') dudit système de climatisation (1, 1') étant configurés pour générer ladite au moins une commande de fonctionnement (6c, 6c') appliquée audit au moins un actionneur de production de chaleur ou de froid (3, 8) en fonction en outre de la valeur d'au moins un paramètre (6b 6b') relatif à au moins un véhicule de transport électrique alimenté par ledit réseau d'alimentation électrique (2), ladite valeur dudit paramètre (6b, 6b') indiquant que de l'énergie électrique est consommée par ledit au moins un véhicule de transport électrique ou que de l'énergie électrique est produite par ledit au moins un véhicule électrique, ladite au moins une commande de fonctionnement (6c, 6c') étant générée de sorte que la puissance moyenne délivrée par ledit au moins un actionneur (3, 8) sur ledit intervalle de temps prédéterminé (I) présente sensiblement la même valeur que lorsque les moyens de régulation (6, 6') prennent uniquement en compte lesdits paramètres représentatifs des conditions climatiques (6a, 6a').

10. Véhicule de transport électrique conforme à la revendication 9, **caractérisé en ce qu'**il comporte en outre des moyens d'accumulation d'énergie (11) configurés pour accumuler de l'énergie électrique, lorsque la valeur du paramètre (6) relatif audit au moins un véhicule de transport électrique est indicatif de la production d'énergie électrique par ledit au moins un véhicule de transport électrique.

11. Véhicule de transport électrique conforme à l'une des revendications 9 ou 10, **caractérisé en ce qu'**il comporte en outre des moyens de délestage (11) configurés pour déconnecter ledit système de climatisation (1, 1') dudit réseau d'alimentation électrique (2) lorsque la valeur du paramètre (6b, 6b') relatif à au moins un véhicule de transport électrique est indicatif de la consommation d'énergie électrique par ledit au moins un véhicule de transport électrique.

12. Véhicule de transport électrique conforme à la revendication 9, **caractérisé en ce que** ledit au moins un paramètre (6b, 6b') relatif à au moins un véhicule de transport électrique est relatif à plusieurs véhicules de transport électrique alimentés par ledit réseau d'alimentation électrique (2).

13. Procédé de régulation de paramètres représentatifs des conditions climatiques à des valeurs prédéfinies dans un véhicule de transport électrique alimenté par un réseau d'alimentation électrique (2), comportant la génération (E1, E2, E3) d'au moins une commande de fonctionnement (6c, 6c') appliquée à au moins un actionneur de production de chaleur ou de froid (3, 8) d'un système de climatisation (1) en fonction de valeurs de paramètres représentatifs des conditions climatiques (6a, 6a'), ledit au moins un actionneur (3, 8) délivrant une puissance moyenne sur un intervalle de temps prédéterminé (I), ledit procédé étant **caractérisé en ce que** la génération de ladite au moins une commande de fonctionnement appliquée audit au moins un actionneur (3, 8) tient en outre compte de la valeur d'un paramètre (6b, 6b') relatif à au moins un véhicule de transport électrique alimenté par ledit réseau d'alimentation électrique (2), ledit au moins un paramètre (6b, 6b') relatif à au moins un véhicule de transport électrique étant relatif à au moins un véhicule de transport électrique alimenté par ledit réseau d'alimentation électrique (2) et différent dudit véhicule de transport électrique comportant ledit système de climatisation (1, 1'), ladite valeur dudit paramètre indiquant que de l'énergie électrique est consommée par ledit au moins un véhicule de transport électrique ou que de l'énergie électrique est produite par ledit au moins un véhicule électrique, ladite au moins une commande de fonctionnement (6c, 6c') étant générée de sorte que la puissance moyenne délivrée par ledit au moins un actionneur (3) sur ledit intervalle de temps prédéterminé (I) présente sensiblement la même valeur que lorsque lors de ladite génération (6) uniquement lesdits paramètres représentatifs des conditions climatiques (6a, 6a') sont pris en compte, sur l'intervalle de temps prédéterminé (I) ladite au moins une commande de fonctionnement (6c, 6c') étant générée de sorte que
- si pendant une première période A où la valeur dudit au moins un paramètre (6b, 6b') indique que de l'énergie électrique est consommée par ledit au moins un véhicule de transport électrique, la puissance moyenne délivrée par ledit au moins un actionneur (3, 8) pendant ladite première période A est inférieure à la valeur de la puissance moyenne pendant ledit intervalle de temps prédéterminé (I) lorsque uniquement lesdits paramètres représentatifs des conditions climatiques (6a, 6a') sont pris en compte pour ladite génération de ladite commande de fonctionnement (6c, 6c'), et
- si pendant une seconde période B la valeur dudit au moins un paramètre indique que de l'énergie électrique est produite par ledit au moins un véhicule de transport électrique, la puissance moyenne délivrée par ledit au moins un actionneur (3, 8) pendant ladite seconde période B est supérieure à ladite valeur de la puissance moyenne pendant ledit intervalle de temps prédéterminé (I) lorsque uniquement lesdits paramètres représentatifs des conditions climatiques (6a, 6a') sont pris en compte pour ladite génération de ladite commande de fonctionnement (6c, 6c').

## Patentansprüche

1. Klimatisierungssystem für ein elektrisches Transportfahrzeug, das von einem Stromversorgungsnetz (2) versorgt wird, wobei das Klimatisierungssystem enthält:
- zumindest einen wärme- oder kälteerzeugenden Aktuator (3, 8) und
- Regelungsmittel (6, 6'), die dazu ausgelegt sind, zumindest einen Betriebsbefehl (6c, 6c'), der an den zumindest einen Aktuator (3, 8) angelegt wird, in Abhängigkeit von Werten von Parametern zu erzeugen, die für die klimatischen Bedingungen (6a, 6a') repräsentativ sind, wobei der zumindest eine Aktuator eine mittlere Leistung über ein vorbestimmtes Zeitintervall (I) liefert,
wobei das Klimatisierungssystem (1, 1') so ausgelegt ist, dass die Regelungsmittel dazu geeignet sind, den zumindest einen an den zumindest einen Aktuator (3, 8) angelegten Betriebsbefehl (6c, 6c') ferner in Abhängigkeit von dem Wert eines Parameters (6b, 6b') zu erzeugen, der sich auf zumindest ein elektrisches Transportfahrzeug bezieht, das von dem Stromversorgungsnetz (2) versorgt wird, wobei der Wert des Parameters (6b, 6b') angibt, dass elektrische Energie von dem zumindest einen elektrischen Transportfahrzeug verbraucht wird oder dass elektrische Energie von dem zumindest einen elektrischen Fahrzeug erzeugt wird, wobei der zumindest eine Betriebsbefehl (6c, 6c') so erzeugt wird, dass die mittlere Leistung, die von dem zumindest einen Aktuator (3, 8) über das vorbestimmte Zeitintervall (I) geliefert wird, im Wesentlichen den gleichen Wert hat, wie wenn die Regelungsmittel (6, 6') nur die Parameter berücksichtigen, die für die klimatischen Bedingungen (6a, 6a') über das vorbestimmte Zeitintervall (I) repräsentativ sind, wobei der zumindest eine Betriebsbefehl (6c, 6c') so erzeugt wird, dass
- dann, wenn während einer ersten Periode A, in der der Wert des zumindest einen Parameters (6b, 6b') angibt, dass elektrische Energie von dem zumindest einen elektrischen Transportfahrzeug verbraucht wird, die von dem zumindest einen Aktuator (3, 8) während der ersten Periode A gelieferte mittlere Leistung niedriger ist als der Wert der mittleren Leistung während des vorbestimmten Zeitintervalls (I), wenn nur die für die klimatischen Bedingungen (6a, 6a') repräsentativen Parameter für die Erzeugung des Betriebsbefehls (6c, 6c') berücksichtigt werden, und
- dann, wenn während einer zweiten Periode B der Wert des zumindest einen Parameters angibt, dass elektrische Energie von dem zumindest einen elektrischen Transportfahrzeug erzeugt wird, die von dem zumindest einen Aktuator (3, 8) während der zweiten Periode B gelieferte mittlere Leistung höher ist als der Wert der mittleren Leistung während des vorbestimmten Zeitintervalls (I), wenn nur die für die klimatischen Bedingungen (6a, 6a') repräsentativen Parameter für die Erzeugung des Betriebsbefehls (6c, 6c') berücksichtigt werden,
wobei das Klimatisierungssystem (1, 1') **dadurch gekennzeichnet ist, dass** der zumindest eine Parameter (6b, 6b'), der sich auf zumindest ein elektrisches Transportfahrzeug bezieht, sich auf zumindest ein elektrisches Transportfahrzeug bezieht, das von dem Stromversorgungsnetz (2) versorgt wird und sich von dem elektrischen Transportfahrzeug unterscheidet, das das Klimatisierungssystem (1, 1') enthält.

2. Klimatisierungssystem nach Anspruch 1, **dadurch gekennzeichnet, dass** der zumindest eine Betriebsbefehl (6c, 6c'), der an den zumindest einen Aktuator (3, 8) angelegt wird, ein Steuersignal (C1, C2) umfasst, und dass bei der Erzeugung des Betriebsbefehls (6c, 6c') zumindest ein Parameter des Steuersignals (C1, C2) in Abhängigkeit von dem Wert des Parameters (6b, 6b'), der sich auf zumindest ein elektrisches Transportfahrzeug bezieht, modifiziert wird.

3. Klimatisierungssystem nach Anspruch 2, **dadurch gekennzeichnet, dass** der Parameter des Steuersignals (C1, C2) eine Amplitude oder eine Dauer ist.

4. Klimatisierungssystem nach einem der Ansprüche 1 bis 3, **dadurch gekennzeichnet, dass** die Regelungsmittel (6, 6') enthalten:
- ein erstes Regelungsmodul, das dazu ausgelegt ist, zumindest einen Zwischenbetriebsbefehl (6ci') in Abhängigkeit von zumindest einem für die klimatischen Bedingungen (6a') repräsentativen Parameter zu erzeugen, und
- ein zweites Regelungsmodul (62'), das dazu ausgelegt ist, den zumindest einen Zwischenbetriebsbefehl (6ci') in Abhängigkeit von dem Wert des Parameters (6b'), der sich auf zumindest ein elektrisches Transportfahrzeug bezieht, zu modifizieren und den zumindest einen Betriebsbefehl (6c') zu erzeugen, der an den zumindest einen Aktuator (8) angelegt wird.

5. Klimatisierungssystem nach einem der Ansprüche 1 bis 4, **dadurch gekennzeichnet, dass** es ferner Energiespeichermittel (11) enthält, die dazu ausgelegt sind, elektrische Energie zu speichern, wenn der Wert des Parameters (6b), der sich auf zumindest ein elektrisches Transportfahrzeug bezieht, die Erzeugung von elektrischer Energie durch das zumindest eine elektrische Transportfahrzeug angibt.

6. Klimatisierungssystem nach einem der Ansprüche 1 bis 5, **dadurch gekennzeichnet, dass** es ferner Entlastungsmittel (11) enthält, die dazu ausgelegt sind, das Klimatisierungssystem (1) von dem Stromversorgungsnetz (2) zu trennen, wenn der Wert des Parameters (6b), der sich auf zumindest ein elektrisches Transportfahrzeug bezieht, den Verbrauch elektrischer Energie durch das zumindest eine elektrische Transportfahrzeug angibt.

7. Klimatisierungssystem nach einem der Ansprüche 1 bis 6, **dadurch gekennzeichnet, dass** der Wert des Parameters (6b, 6b'), der sich auf zumindest ein elektrisches Transportfahrzeug bezieht, umfasst:
- einen Wert der elektrischen Leistung oder einer Zugkraft oder einer Bremskraft oder eines Abstands oder einer Geschwindigkeit oder einer Beschleunigung, oder
- einen Wert, der für einen Öffnungs- oder Schließzustand der Türen des zumindest einen elektrischen Transportfahrzeugs repräsentativ ist, oder
- einen Wert einer Spannung des Stromnetzes, das das zumindest eine elektrische Transportfahrzeug versorgt.

8. Klimatisierungssystem nach einem der Ansprüche 1 bis 7, **dadurch gekennzeichnet, dass** sich der zumindest eine Parameter (6b, 6b'), der sich auf zumindest ein elektrisches Transportfahrzeug bezieht, auf mehrere elektrische Transportfahrzeuge bezieht, die von dem Stromversorgungsnetz (2) versorgt werden.

9. Elektrisches Transportfahrzeug, das von einem Stromversorgungsnetz (2) versorgt wird, **dadurch gekennzeichnet, dass** es ein Klimatisierungssystem (1, 1') nach einem der Ansprüche 1 bis 8 enthält, wobei die Regelungsmittel (6, 6') des Klimatisierungssystems (1, 1') dazu ausgelegt sind, den zumindest einen an den zumindest einen wärme- oder kälteerzeugenden Aktuator (3, 8) angelegten Betriebsbefehl (6c, 6c') ferner in Abhängigkeit von dem Wert zumindest eines Parameters (6b, 6b') zu erzeugen, der sich auf zumindest ein elektrisches Transportfahrzeug bezieht, das von dem Stromversorgungsnetz (2) versorgt wird, wobei der Wert des Parameters (6b, 6b') angibt, dass elektrische Energie von dem zumindest einen elektrischen Transportfahrzeug verbraucht wird oder dass elektrische Energie von dem zumindest einen elektrischen Fahrzeug erzeugt wird, wobei der zumindest eine Betriebsbefehl (6c, 6c') so erzeugt wird, dass die mittlere Leistung, die von dem zumindest einen Aktuator (3, 8) über das vorbestimmte Zeitintervall (I) geliefert wird, im Wesentlichen den gleichen Wert hat, wie wenn die Regelungsmittel (6, 6') nur die Parameter berücksichtigen, die für die klimatischen Bedingungen (6a, 6a') repräsentativ sind.

10. Elektrisches Transportfahrzeug nach Anspruch 9, **dadurch gekennzeichnet, dass** es ferner Energiespeichermittel (11) enthält, die dazu ausgelegt sind, elektrische Energie zu speichern, wenn der Wert des Parameters (6), der sich auf das zumindest eine elektrische Transportfahrzeug bezieht, die Erzeugung von elektrischer Energie durch das zumindest eine elektrische Transportfahrzeug angibt.

11. Elektrisches Transportfahrzeug nach einem der Ansprüche 9 oder 10, **dadurch gekennzeichnet, dass** es ferner Entlastungsmittel (11) enthält, die dazu ausgelegt sind, das Klimatisierungssystem (1, 1') von dem Stromversorgungsnetz (2) zu trennen, wenn der Wert des Parameters (6b, 6b'), der sich auf zumindest ein elektrisches Transportfahrzeug bezieht, den Verbrauch elektrischer Energie durch das zumindest eine elektrische Transportfahrzeug angibt.

12. Elektrisches Transportfahrzeug nach Anspruch 9, **dadurch gekennzeichnet, dass** sich der zumindest eine Parameter (6b, 6b'), der sich auf zumindest ein elektrisches Transportfahrzeug bezieht, auf mehrere elektrische Transportfahrzeuge bezieht, die von dem Stromversorgungsnetz (2) versorgt werden.

13. Verfahren zur Regelung von Parametern, die für klimatische Bedingungen bei vordefinierten Werten in einem elektrischen Transportfahrzeug repräsentativ sind, das von einem Stromversorgungsnetz (2) versorgt wird, umfassend die Erzeugung (E1, E2, E3) von zumindest einem Betriebsbefehl (6c, 6c'), der an zumindest einen wärme- oder kälteerzeugenden Aktuator (3, 8) eines Klimatisierungssystem (1) angelegt wird, in Abhängigkeit von Werten von Parametern, die für die klimatischen Bedingungen (6a, 6a') repräsentativ sind, wobei der zumindest eine Aktuator (3, 8) eine mittlere Leistung über ein vorbestimmtes Zeitintervall (I) liefert,
wobei das Verfahren **dadurch gekennzeichnet ist, dass** die Erzeugung des zumindest einen an den zumindest einen Aktuator (3, 8) angelegten Betriebsbefehls ferner den Wert eines Parameters (6b, 6b') berücksichtigt, der sich auf zumindest ein elektrisches Transportfahrzeug bezieht, das von dem Stromversorgungsnetz (2) versorgt wird, wobei der zumindest eine Parameter (6b, 6b'), der sich auf zumindest ein elektrisches Transportfahrzeug bezieht, sich auf zumindest ein elektrisches Transportfahrzeug bezieht, das von dem Stromversorgungsnetz (2) versorgt wird und sich von dem elektrischen Transportfahrzeug unterscheidet, das das Klimatisierungssystem (1, 1') enthält, wobei der Wert des Parameters angibt, dass elektrische Energie von dem zumindest einen elektrischen Transportfahrzeug verbraucht wird oder dass elektrische Energie von dem zumindest einen elektrischen Fahrzeug erzeugt wird, wobei der zumindest eine Betriebsbefehl (6c, 6c') so erzeugt wird, dass die von dem zumindest einen Aktuator (3) über das vorbestimmte Zeitintervall (I) gelieferte mittlere Leistung im Wesentlichen den gleichen Wert hat, wie wenn bei der Erzeugung (6) nur die für die klimatischen Bedingungen (6a, 6a') repräsentativen Parameter über das vorbestimmte Zeitintervall (I) berücksichtigt werden,
wobei der zumindest eine Betriebsbefehl (6c, 6c') so erzeugt wird, dass
- dann, wenn während einer ersten Periode A, in der der Wert des zumindest einen Parameters (6b, 6b') angibt, dass elektrische Energie von dem zumindest einen elektrischen Transportfahrzeug verbraucht wird, die von dem zumindest einen Aktuator (3, 8) während der ersten Periode A gelieferte mittlere Leistung niedriger ist als der Wert der mittleren Leistung während des vorbestimmten Zeitintervalls (I), wenn nur die für die klimatischen Bedingungen (6a, 6a') repräsentativen Parameter für die Erzeugung des Betriebsbefehls (6c, 6c') berücksichtigt werden, und
- dann, wenn während einer zweiten Periode B der Wert des zumindest einen Parameters angibt, dass elektrische Energie von dem zumindest einen elektrischen Transportfahrzeug erzeugt wird, die von dem zumindest einen Aktuator (3, 8) während der zweiten Periode B gelieferte mittlere Leistung höher ist als der Wert der mittleren Leistung während des vorbestimmten Zeitintervalls (I), wenn nur die für die klimatischen Bedingungen (6a, 6a') repräsentativen Parameter für die Erzeugung des Betriebsbefehls (6c, 6c') berücksichtigt werden.

## Claims

1. Air conditioning system for an electric transport vehicle supplied by an electrical supply network (2), the air conditioning system comprising
- at least one actuator for the production of heat or cold (3, 8), and
- regulating means (6, 6') configured in order to generate at least one operating command (6c, 6c') applied to said at least one actuator (3, 8) as a function of values for parameters representing the climatic conditions (6a, 6a'), said at least one actuator delivering an average power over a predetermined time period (I),
said air conditioning system (1, 1') being configured such that the regulating means are configured in order to generate said at least one operating command (6c, 6c') applied to said at least one actuator (3, 8) as a function moreover of the value for a parameter (6b, 6b,) relating to at least one electric transport vehicle supplied by said electrical supply network (2), said value for said parameter (6b, 6b') indicating that the electrical energy is consumed by said at least one electric transport vehicle or that electrical energy is produced by said at least one electric vehicle, said at least one operating command (6c, 6c') being generated such that the average power delivered by said at least one actuator (3, 8) over said predetermined time period (I) has substantially the same value as when the regulating means (6, 6') only take into account said parameters representing the climatic conditions (6a, 6a')over the predetermined time period (I), said at least one operating command (6c, 6c') being generated such that
- if during a first period A in which the value for said at least one parameter (6b, 6b') indicates that the electrical energy is consumed by said at least one electric transport vehicle, the average power delivered by said at least one actuator (3, 8) during said first period A is less than the value of the average power during said predetermined time period (I) when only said parameters representing the climatic conditions (6a, 6a') are taken into account for said generation of said operating command (6c, 6c'), and
- if during a second period B the value for said at least one parameter indicates that electrical energy is produced by said at least one electric transport vehicle, the average power delivered by said at least one actuator (3, 8) during said second period B is greater than said value of the average power during said predetermined time period (I) when only said parameters representing the climatic conditions (6a, 6a') are taken into account for said generation of said operating command (6c, 6c'),
said air conditioning system (1,1'), being **characterized in that** said at least one parameter (6b, 6b') relating to at least one electric transport vehicle relates to at least one electric transport vehicle supplied by said electrical supply network (2) and different from said electric transport vehicle comprising said air conditioning system (1, 1').

2. Air conditioning system according to claim 1, **characterized in that** said at least one operating command (6c, 6c') applied to said at least one actuator (3, 8) comprises a control signal (C1, C2), and **in that** during the generation of said operating command (6c, 6c'), at least one parameter of said control signal (C1, C2) is modified as a function of said value for said parameter (6b, 6b') relating to at least one electric transport vehicle.

3. Air conditioning system according to claim 2, **characterized in that** said parameter of said control signal (C1, C2) is an amplitude or a duration.

4. Air conditioning system according to one of claims 1 to 3, **characterized in that** the regulating means (6, 6') comprise:
- a first regulating module configured in order to generate at least one intermediate operating command (6ci') as a function of at least one parameter representing climatic conditions (6a'), and
- a second regulating module (62') configured in order to modify said at least one intermediate operating command (6ci') as a function of said value for said parameter (6b') relating to at least one electric transport vehicle and to generate said at least one operating command (6c') applied to said at least one actuator (8).

5. Air conditioning system according to one of claims 1 to 4, **characterized in that** it also comprises energy storage means (11) configured in order to store electrical energy when the value for the parameter (6b) relating to at least one electric transport vehicle indicates the production of electrical energy by said at least one electric transport vehicle.

6. Air conditioning system according to one of claims 1 to 5, **characterized in that** it also comprises load shedding means (11) configured in order to disconnect said air conditioning system (1) from said electrical supply network (2) when the value for the parameter (6b) relating to at least one electric transport vehicle indicates electrical energy consumption by said at least one electric transport vehicle.

7. Air conditioning system according to one of claims 1 6, **characterized in that** said value for said parameter (6b, 6b') relating to at least one electric transport vehicle comprises:
- a value for electrical power, or a tractive force, or a braking force, or a distance, or a speed, or an acceleration, or
- a value representing an open or closed state of the doors of said at least one electric transport vehicle, or
- a value for a voltage of said power network supplying said at least one electric transport vehicle.

8. Air conditioning system according to one of claims 1 to 7, **characterized in that** said at least one parameter (6b, 6b') relating to at least one electric transport vehicle relates to several electric transport vehicles supplied by said electrical supply network (2).

9. Electric transport vehicle supplied by an electrical supply network (2), **characterized in that** it comprises an air conditioning system (1, 1') according to one of claims 1 to 8, said regulating means (6, 6') of said air conditioning system (1, 1') being configured in order to generate said at least one operating command (6c, 6c') applied to said at least one actuator for the production of heat or cold (3, 8) as a function moreover of the value for at least one parameter (6b, 6b') relating to at least one electric transport vehicle supplied by said electrical supply network (2), said value for said parameter (6b, 6b') indicating that electrical energy is consumed by said at least one electric transport vehicle or that electrical energy is produced by said at least one electric vehicle, said at least one operating command (6c, 6c') being generated such that the average power delivered by said at least one actuator (3, 8) over the predetermined time period (I) has substantially the same value as when the regulating means (6, 6') only take into account said parameters representing the climatic conditions (6a, 6a').

10. Electric transport vehicle according to claim 9, **characterized in that** it also comprises energy storage means (11) configured in order to store electrical energy, when the value for the parameter (6) relating to said at least one electric transport vehicle indicates the production of electrical energy by said at least one electric transport vehicle.

11. Electric transport vehicle according to one of claims 9 or 10, **characterized in that** it also comprises load shedding means (11) configured in order to disconnect said air conditioning system (1, 1') from said electrical supply network (2) when the value for the parameter (6b, 6b') relating to at least one electric transport vehicle indicates electrical energy consumption by said at least one electric transport vehicle.

12. Electric transport vehicle according to claim 9, **characterized in that** said at least one parameter (6b, 6b') relating to at least one electric transport vehicle relates to several electric transport vehicles supplied by said electrical supply network (2).

13. Method for regulating parameters representing climatic conditions to predefined values in an electric transport vehicle supplied by an electrical supply network (2), comprising the generation (E1, E2, E3) of at least one operating command (6c, 6c') applied to at least one actuator for the production of heat or cold (3, 8) of an air conditioning system (1) as a function of values for parameters representing the climatic conditions (6b, 6b'), said at least one actuator (3, 8) delivering an average power over a predetermined time period (I), said method being **characterized in that** generating said at least one operating command applied to said at least one actuator (3, 8) takes into account moreover a value for a parameter (6b, 6b') relating to at least one electric transport vehicle supplied by said electrical supply network (2), said at least one parameter (6b, 6b') relating to at least one electric transport vehicle being relative to at least one electric transport vehicle supplied by said electrical supply network (2) and different from said electric transport vehicle comprising said air conditioning system (1, 1'), said value for said parameter indicating that electrical energy is consumed by said at least one electric transport vehicle or that electrical energy is produced by said at least one electric vehicle, said at least one operating command (6c, 6c') being generated such that the average power delivered by said at least one actuator (3) over said predetermined time period (I) has substantially the same value as when, during said generation (6), only said parameters representing the climatic conditions (6a, 6a') are taken into account, over the predetermined time period (I), said at least one operating command (6c, 6c') being generated such that
- if during a first period A in which the value for said at least one parameter (6b, 6b') indicates that the electrical energy is consumed by said at least one electric transport vehicle, the average power delivered by said at least one actuator (3, 8) during said first period A is less than the value of the average power during said predetermined time period (I) when only said parameters representing the climatic conditions (6a, 6a') are taken into account for said generation of said operating command (6c, 6c'), and
- if during a second period B the value for said at least one parameter indicates that electrical energy is produced by said at least one electric transport vehicle, the average power delivered by said at least one actuator (3, 8) during said second period B is greater than said value of the average power during said predetermined time period (I) when only said parameters representing the climatic conditions (6a, 6a') are taken into account for said generation of said operating command (6c, 6c').
